# EUROPÄISCHE PATENTSCHRIFT

(11) **EP 2 687 415 B1**
(45) Veröffentlichungstag und Bekanntmachung des Hinweises auf die Patenterteilung: **01.04.2015**
(21) Anmeldenummer: 13003614.8
(22) Anmeldetag: 18.07.2013
(51) Int. Cl.: B60R 22/48, E02F 9/24

(54) **Fahrersitzsicherungsvorrichtung**
Driver's seat securing device
Dispositif de sécurisation du siège du conducteur

(30) Priorität: 18.07.2012 DE 122012006927 C
(43) Veröffentlichungstag der Anmeldung: 22.01.2014
(73) Patentinhaber: Thaler, Manfred, 84570 Polling (DE)
(72) Erfinder: Thaler, Manfred, 84570 Polling (DE)
(74) Vertreter: Gössmann, Christoph Tassilo

(56) Entgegenhaltungen:
- EP-A1- 0 328 341
- EP-A2- 1 295 759
- US-A- 5 547 039
- US-B1- 6 300 869

## Beschreibung

Die Erfindung betrifft eine Fahrersitzsicherheitsvorrichtung und ein Fahrersitzsicherungsverfahren gemäß den Ansprüchen 1 und 3.

Kleine Arbeitsmaschinen mit Fahrersitz und offener Kabine, insbesondere Kompaktlader bis 4,5 to Gesamtgewicht, sind in der Regel mit einem als Beckengurt ausgeführten Sicherheitsgurt ausgerüstet. Zweck des Sicherheitsgurts ist es, die Bedienperson des Kompaktlader in Unfallsituationen auf dem Fahrersitz zu halten. Eine besonders gefährliche Unfallsituation stellt das Umkippen eines Kompaktladers dar, da hierbei die Gefahr besteht, dass die Bedienperson aus der offenen ungeschlossenen Fahrerkabine fällt und anschließend am Boden von Teilen der Fahrerkabine eingeklemmt wird. Ein Anlegen des Sicherheitsgurts kann diese Unfallsituation deutlich entschärfen, da der Sicherheitsgurt ein Herausfallen aus der Fahrerkabine sicher verhindert.

Diesem Sachverhalt zum Trotz und entgegen geltender Sicherheitsvorschriften legen die Bediener von Kompaktladern den Sicherheitsgurt in der Praxis häufig nicht an. Als Grund hierfür wird angesehen, dass die Bedienpersonen das Schließen und Öffnen des Sicherheitsgurts als lästig empfinden, insbesondere, wenn die Bedienperson den Kompaktlader wiederholt verlassen muss.

Um die Bedienpersonen zum Anlegen des Sicherheitsgurts zu bewegen, ist es bekannt, den Zustand des Gurtschlosses des Sicherheitsgurts mit einem Gurtschlosssensor zu überwachen und gegebenenfalls automatisch einen Warnton oder ein Warnlicht einzuschalten, wenn dass Gurtschloss während des Betriebs des Kompaktladers geöffnet ist. Diese Warnfunktion wird von Bedienpersonen des Kompaktladers jedoch häufig dadurch außer Kraft gesetzt, dass in die am Fahrersitz befindliche Buchse des Gurtschlosses ein Duplikat der an dem Gurt befindlichen Lasche des Gurtschlosses eingesteckt wird, oder dass der Gurt um die Rückseite des Fahrersitzes herumgeführt und dann das Gurtschloss geschlossen wird.

EP 1 295 759 offenbart dem Oberbegriff von Anspruch 1.

Der vorliegenden Erfindung liegt daher die Aufgabe zugrunde, den Stand der Technik zu verbessern und insbesondere eine Fahrersitzsicherheitsvorrichtung zur Verfügung zu stellen, bei der ein Anlegen des Sicherheitsgurts sicher überwacht werden kann und der Bedienperson ein Nichtanlegen bewußt gemacht wird und sie nicht zu gängeln und die Erfindung an die Arbeitsbedingungen so anzupassen, dass gerade den Bedingungen auf Bauernhöfen Rechnung getragen wird.

Gegenstand der Erfindung ist eine Fahrersitzsicherheitsvorrichtung gemäß Anspruch 1.

Die Steuer-, Auswerteeinheit ist vorzugsweise derart ausgeführt, dass der Zustand und/oder Änderungen der von dem Sensor in der Gurtschnalle und dem Fahrererkennungssensor erzeugten Signale in der Steuereinheit fortlaufend erfasst und ausgewertet werden. Die korrekte Benutzung des Sicherheitsgurts wird somit fortlaufend während der Benutzung des Kompaktladers, insbesondere während jedes Auf- und Absteigens der Bedienperson überprüft.

Die Steuer-, Auswerteeinheit weist darüber hinaus einen Signalausgang auf, der in Abhängigkeit von dem Ergebnis der Auswertung der Signale eine korrekte oder eine falsche Verwendung des Sicherheitsgurts meldet. Über den Signalausgang können in Abhängigkeit von einer korrekten oder falschen Verwendung des Sicherheitsgurts beispielsweise akustische oder optische Warneinrichtungen aktiviert oder bestimmte Funktionen des Kompaktladers beeinflusst werden. Der Signalausgang kann beispielsweise als physisch vorhandene Ausgangsschnittstelle ausgebildet sein. Ebenso möglich ist es, dass der Signalausgang als innerhalb der Steuer-, Auswerteeinheit abgeschlossener elektrischer Leiter ausgebildet ist, wenn das Signal des Signalausgangs direkt in der Steuer-, Auswerteeinheit weiterverarbeitet wird.

Unter der Auswerte- und Steuereinheit kann vorliegend ein elektrisches Gerät, wie beispielsweise ein Steuergerät, insbesondere vorzugsweise eine bekannte Steuer-, Auswerteeinheit für Airbags, verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Gemäß einer erfindungsgemäßen Ausgestaltung der Steuer-, Auswerteeinheit meldet bei einem die Anwesenheit einer Person signalisierenden Fahrererkennungssensor der Signalausgang dann eine korrekte Verwendung des Sicherheitsgurts, wenn gleichzeitig der Gurtschlosssensor ein geschlossenes Gurtschloss signalisiert. Es wird also überwacht, dass bei der Anwesenheit einer Bedienperson das Gurtschloss geschlossen ist.

Darüber hinaus wird bei einem das Aufstehen einer Person von dem Fahrersitz signalisierenden Fahrererkennungssensor vom Signalausgang dann eine korrekte Verwendung des Sicherheitsgurts gemeldet, wenn kurzzeitig vorher der Gurtschlosssensor ein Lösen des Gurtschlosses signalisiert hat. Es wird also überwacht, ob vor dem Aufstehen der Bedienperson das Gurtschloss geöffnet wurde. Falls dies nicht der Fall ist, geht die Steuer- Auswerteeinheit davon aus, dass das Gurtschloss missbräuchlich, z. B. mit einem Duplikat der zum Gurtschloss gehörenden Lasche, geschlossen ist.

Bei einem das Hinsetzen einer Person auf den Fahrersitz signalisierenden Fahrererkennungssensor meldet der Signalausgang dann eine korrekte Verwendung des Sicherheitsgurts, wenn gleichzeitig der Gurtschlosssensor ein geöffnetes Gurtschloss signalisiert. Hierbei wird davon ausgegangen, dass sich die Bedienperson nur dann auf den Fahrersitz setzen kann, wenn der Gurt geöffnet ist. Wenn sich eine Bedienperson dennoch hinsetzt, geht die Steuer-Auswerteeinheit wiederum davon aus, dass das Gurtschloss mißbräuchlich geschlossen ist und dass bei bereits vorher geschlossenem Gurtschloss, das betreffende Fahrzeug nicht gestartet oder in Bewegung gesetzt werden kann.

Bei einer Bedienperson, die einen Kompaktlader bei geöffnetem Gurtschloss startet, ertönt erfindungsgemäß nach der Erfassung einer ersten definierten Zeit, wie vorzugsweise 30 Sekunden bis 2 Minuten nach Starten des Fahrzeugs ein Warnton mit 50 bis 150 Dezibel, vorzugsweise 100 Dezibel, bevorzugt 90 Dezibel, der die Bedienperson darauf hinweist, dass dass Gurtschloss geschlossen werden muss. Wird das Gurtschloss trotzdem nicht geschlossen, ertönt das Signal für einen definierten erfaßten Zeitraum noch vorzugsweise 1 bis 5 Minuten, bevorzugt 2 Minuten, um dann vollständig zu verstummen. Der Warnton kann vorzugsweise von einer zusätzlichen Sirene oder bevorzugt von einer bereits im Fahrzeug vorhandenen akustischen Warneinrichtung, wie einer Hupe, ertönen.

Die Steuer-, Auswerteeinheit ist derart ausgeführt, dass die erste definierte Zeit wieder erneut erfasst wird, wenn für den Fahrererkennungssensor keine Bedienperson vor dem Ende des Erfassens der ersten definierten Zeit erfassbar ist, das heißt, dass jedesmal, wenn die Bedienperson aufsteht, also ohne den Motor abzustellen, z.B. um eine kurze Tätigkeit außerhalb des Fahrzeugs auszuführen, bevor die erste definierte Zeit erfasst wurde und sich wieder hinsetzt, beginnt die Erfassung der ersten definierten Zeit erneut.

Dieser Vorgang der Rückstellung der definierten ersten Zeit wiederholt sich also jedesmal, wenn die Bedienperson aufsteht.

Diese Vorgehensweise trägt der Tatsache Rechnung, dass ein Kompaktladerfahrer, der oft nur kurz Fahrten hat, etwa im Stall, und immer wieder absteigt und sich hinsetzt, nicht jedesmal sich angurten will. Dem trägt die erfindungsgemäße Fahrersitzsicherheitsvorrichtung Rechnung, wenn die Bedienperson vor Ertönen des Warnsignals bei geöffnetem Gurtschloss aufsteht und sich wieder hinsetzt.

Eine Bedienperson, die nach Ertönen des Warnsignals weiterfährt, löst damit für eine Dauer von 1 bis 5 Minuten, vorzugsweise 2 Minuten einen Warnton aus, der danach verstummt. Dies ist eine ausreichende Zeit, um der Bedienperson klar zu machen, dass sie das Gurtschloss schließen soll. Damit hat sich die Bedienperson bewußt gegen die Benutzung eines geschlossenen Gurtschlosses entschieden, vorhersehbarer Mißbrauch ist somit ausgeschlossen.

Falls das Gurtschloss bereits vor dem Starten oder Anfahren geschlossen ist, läßt sich das Fahrzeug weder starten, oder wenn es sich starten läßt, keinesfalls fahren. Damit sich das Fahrzeug starten und/oder fahren läßt, muss das Gurtschloss immer geöffnet werden und die Bedienperson muss aufstehen und sich wieder hinsetzen, wobei das Gurtschloss offen sein muss.

Ein weiterer Gegenstand ist ein Fahrersitzsicherungsverfahren gemäß Anspruch 3.

Die Lautquelle verstummt in jedem Fall nach einer definierten Zeit, vorzugsweise nach einer Dauer von 1 bis 5 Minuten, bevorzugt 2 Minuten, das heißt eine Bedienperson, die nach Ertönen des Warnsignals weiterfährt, löst damit für eine Dauer von 1 bis 5 Minuten, bevorzugt 2 Minuten einen Warnton aus, der danach verstummt.

Jedesmal, wenn die Bedienperson aufsteht, z.B. um eine kurze Tätigkeit außerhalb des Fahrzeugs auszuführen, bevor die erste definierte Zeit erfasst wurde und sich wieder hinsetzt, beginnt die Erfassung der ersten Zeit erneut.

Dieser Vorgang der Rückstellung der ersten definierten Zeit wiederholt sich also jedesmal, wenn die Bedienperson aufsteht.

Beim erfindungsgemäßen Fahrersitzsicherungsverfahren für Fahrer in Fahrzeugen mit offener Kabine kann bei bereits vorher geschlossenem Gurtschloss, das betreffende Fahrzeug nicht gestartet oder in Bewegung gesetzt werden.

Erfindungsgemäß ist beim Fahrersitzsicherungsverfahren für Fahrer in Fahrzeugen mit offener ungeschlossener Kabine das Starten oder in Bewegung setzen des betreffenden Fahrzeugs nur möglich, wenn das Gurtschloss geöffnet wird und wenn ein Fahrer sich hingesetzt hat oder aufgestanden ist und sich wieder hingesetzt hat.
Vorteil der vorliegenden Erfindung ist, dass mit einfachen Mitteln eine Fahrersitzsicherungsvorrichtung und ein Fahrersitzsicherungsverfahren zur Verfügung gestellt werden, die auch von der Bedienperson angenommen werden kann, ohne dass sie sich gegängelt fühlen müssen.

### Figur 1

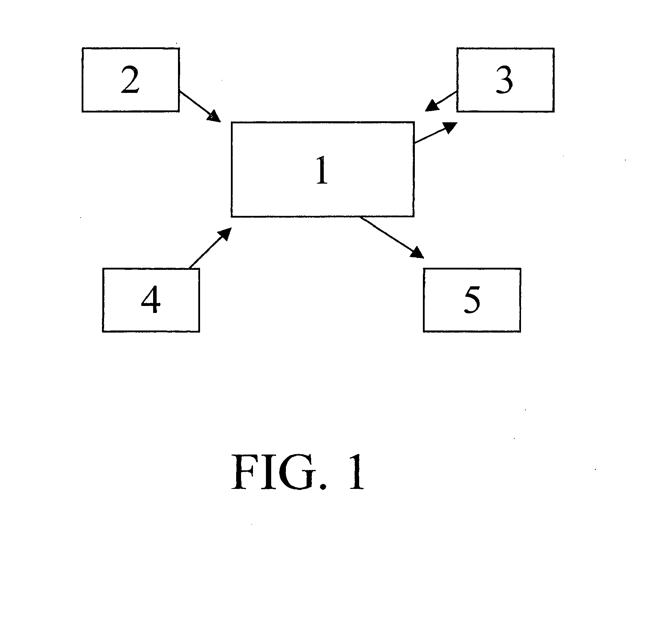

Figur 1 zeigt die Wirkverbindung von Steuer-, Auswerteeinheit 1 zu dem Sensor in der Gurtschnalle 2 und dem Fahrererkennungssensor 4 zur Zeiterfassungseinheit 3 und wiederum zur Lautquelle 5.

## Patentansprüche

1. Fahrersitzsicherheitsvorrichtung für eine offene ungeschlossene Kabine, mit einer Steuer-, Auswerteeinheit (1), die in Wirkverbindung mit einem Fahrererkennungssensor (4) im Fahrersitz, einer Zeiterfassungseinheit (3), einem Sensor in der Gurtschnalle (2) eines Sicherheitsgurts und einer Anlaßvorrichtung oder Fortbewegungsvorrichtung eines Fahrzeugs steht, wobei die Steuer-Auswerteeinheit (1) über mindestens eine Schnittstelleneinheit Informationen des Fahrererkennungssensors (4) und des Sensors in der Gurtschnalle (2) eines Sicherheitsgurts zur Ermittlung eines aktuellen Zustandes der Gurtschnalle, ob geschlossen oder offen, empfängt und diese Informationen auswertet, um einen nicht wirksam angelegten Sicherheitsgurt zu erkennen
**dadurch gekennzeichnet, dass**
die Steuer-Auswerteeinheit (1) derart ausgeführt ist,
eine Lautquelle (5), nach Starten des Fahrzeugmotors, über eine Zeiterfassungseinheit (3), nach Erfassen einer definierten ersten Zeit, welche ein Geräusch anzusteuern mit 50 bis 150 Dezibel für eine zweite definierte Zeit abgibt, und das die Steuer-Auswerteeinheit (1) derart ausgeführt ist, dass das Erfassen der ersten definierten Zeit dadurch gestartet wird, dass durch den Fahrererkennungssensor (4) eine Bedienperson erfasst wird und dass die erste vordefinierte Zeit zurückgestellt wird, wenn die Bedienperson vor Ablauf der ersten vordefinierten Zeit aufsteht.

2. Fahrersitzsicherheitsvorrichtung für eine offene ungeschlossene Kabine nach Anspruch 1, **dadurch gekennzeichnet, dass** die Steuer- Auswerteeinheit (1) derart ausgeführt ist, dass der Zustand und/oder Änderungen des Sensors in der Gurtschnalle (2) und dem Sensor in der Gurtschnalle (2) erzeugten Signale in der Steuer-Auswerteeinheit (1) fortlaufend erfassbar und auswertbar sind.

3. Fahrersitzsicherungsverfahren mit einer Fahrersitzsicherheitsvorrichtung gemäß einem der Ansprüche 1 oder 2 für Fahrer in Fahrzeugen mit offener ungeschlossener Kabine, wobei ein Fahrer auf einem Sitz mit einem Fahrerererkennungssensor (4) Fahrererkennung Platz nimmt, wobei die Gurtschnalle offen ist oder nach dem Hinsetzen geschlossen wird, wobei nach dem Anlassen des Motors, bei offener Gurtschnalle, eine Zeiterfassungsvorrichtung (3) eine definierte erste Zeit erfasst, bis eine Lautquelle für eine definierte vorbestimmte zweite Zeit angesteuert wird und ein Geräusch mit 50 bis 150 Dezibel für eine definierte Zeit abgibt, wobei die Lautquelle durch Schließen der Gurtschnalle abgestellt werden kann.

4. Fahrersitzsicherungsverfahren für Fahrer in Fahrzeugen mit offener ungeschlossener Kabine, nach Anspruch 3, **dadurch gekennzeichnet, dass** die Steuer- Auswerteeinheit (1) derart ausgeführt ist, dass der Zustand und/oder Änderungen des Sensors in der Gurtschnalle (2) und dem Sensor in der Gurtschnalle (2) erzeugten Signale in der Steuer-Auswerteeinheit fortlaufend erfasst und ausgewertet werden.

5. Fahrersitzsicherungsverfahren für Fahrer in Fahrzeugen mit offener ungeschlossener Kabine nach Anspruch 3 bis 4, **dadurch gekennzeichnet, dass** die Lautquelle (5) in jedem Fall nach einer definierten Zeit verstummt.

6. Fahrersitzsicherungsverfahren für Fahrer in Fahrzeugen mit offener ungeschlossener Kabine nach einem oder mehreren der Ansprüche 3 bis 5 wobei das betreffende Fahrzeug nicht gestartet oder in Bewegung gesetzt werden kann,_wenn_die Vorrichtung zur Fahrererkennung erkennt, dass ein Fahrer bei bereits geschlossenem Gurtschloss Platz nimmt.

7. Fahrersitzsicherungsverfahren für Fahrer in Fahrzeugen mit offener ungeschlossener Kabine nach einem oder mehreren der Ansprüche 3 bis 6, **dadurch gekennzeichnet, dass** das Starten oder in Bewegung setzen des betreffenden Fahrzeugs nur möglich ist, wenn das Gurtschloss geöffnet wird und wenn ein Fahrer sich hingesetzt hat oder aufgestanden ist und sich wieder hingesetzt hat.

## Claims

1. Driver's seat safety device for an open unclosed cabin, comprises a control-evaluation unit (1), which is operatively connected to a driver detection sensor (4) in a driver's seat, a time detection unit (3), a sensor in the buckle (2) of a seat belt, and a starting device or propulsion device of a vehicle, wherein the control-evaluation unit (1) using at least one interface unit information of the driver detection sensor (4) and the sensor in the buckle (2) of the seat belt for determining a current state of the buckle, whether closed or open, receives and evaluates this information, to identify non-effectively fastened seat belt
**characterized in that**,
the control-evaluation unit (1) is designed in such a way to control, a sound source (5), after starting the vehicle engine, upon detecting a first defined time, by a time detecting unit (3), emits a sound output of 50 to 150 decibels for a second defined time and the control-evaluation unit (1) is designed such that the detection of the first defined time is started by the driver detection sensor(4) upon detection of a driver and a first predefined time is reset when the driver stands up before the expiration of the first predetermined time.

2. The driver's seat safety device for an open unclosed cabin according to claim 1, **characterized in that** the control-evaluation unit (1) is designed in such a way that the state and / or changes of the sensor in the buckle (2) and signals generated by the sensor in the buckle (2) in the control-evaluation unit (1) are continuously detectable and evaluable.

3. Driver's seat assurance method with a driver's seat safety device according to claim 1 or 2 for drivers in vehicles with open unclosed cabin, wherein a driver sits on a seat with a driver detection sensor (4), wherein a buckle is open or closed after sitting down, wherein after starting of the engine, with the open buckle, a time detecting unit (3) detects a predetermined first defined time, activates a sound source for a predetermined second defined time and emits a sound with 50 to 150 decibels for a defined time, wherein the sound source can be switched off by closing the buckle.

4. The driver's seat assurance methods for drivers in vehicles with open unclosed cabin, as claimed in claim 3, **characterized in that** the control-evaluation unit (1) is designed in such a way that the state and / or changes of the sensor in the buckle (2) and signals generated by the sensor in the buckle (2) in the control-evaluation unit (1) are continuously recorded and evaluated.

5. The driver's seat assurance methods for drivers in vehicles with open unclosed cabin according to claims 3 to 4, **characterized in that** the sound source (5) falls silent in any case after a defined time.

6. The driver's seat assurance methods for drivers in vehicles with open unclosed cabin according to one or more of claims 3 to 5, the subject vehicle cannot be started or set in motion, if the driver identification device identifies that the driver takes place by already closed buckle.

7. The driver's seat assurance methods for drivers in vehicles with open unclosed cabin by one or more of claims 3 to 6, **characterized in that** the starting or setting in motion of the subject vehicle is possible only when the buckle is open and if the driver has seated or stood up and sat again.

## Revendications

1. Dispositif de sécurité de siège conducteur pour la cabine ouverte et pas fermée, qui comprise d'une unité (1) de commande et d'exploitation branché de manière opérative à capteur de détection de conducteur (4) installée au siège de conducteur, d'une unité de détection de temps (3), d'un capteur dans la boucle (2) de ceinture de sécurité, et d'un dispositif de démarrage ou dispositif de propulsion de véhicule, où l'unité (1) de commande et d'exploitation utilisant au minimum d'information d'unité d'interface de capteur de détection de conducteur (4) et le capteur dans la boucle (2) de ceinture de sécurité pour établir l'état actuel de boucle, si fermée ou ouverte, réçoit et vérife cette infirmation, afin d'identifer la ceinture de sécurité pas bien attachée
carctérisée en ce que,
l'unité de commande et d'exploitation (1) est conceptualisé en telle manière pour la commande d'une source sonore(5), qu'après le démarrage de l'engin de véhicule, après la détection de premier temps défini, par unité de détection de temps(3), émis une sortie sonore de 50 à 150 décibels pour le deuxième temps défini et l'unité de commande et d'exploitation est conceptualisée en telle manière que la détection du premier temps défini est démarrée par le capteur de détection de conducteur (4) après la détection de conducteur et le temps prédéfiini est réinitialisé le moment le conducteur est debout avant l'expiration de premier temps prédéterminé.

2. Dispositif de sécurité de siège de conducteur pour une cabine ouverte pas fermée selon la revendication 1, carctérisée en ce que, l'unité de commande et d'exploitation (1) conceptualisée en telle manière que l'état et/ou les changements de capteur dans la boucle (2) et les signaux émis par le capteur dans la boucle (2) dans l'unité de commande et d'exploitation (1) sont détectés et évalués en permanence.

3. Méthode d'assurance de siège de conducteur avec un dispositif de sécurité de conducteur, selon une de revendications 1 ou 2 pour les conducteurs dans les véhicules avec une cabine ouverte et pas fermée, où la boucle est ouverte ou fermé après l'assise, où après le démarrage de l'engin, avec la boucle ouverte, une unité de détection de temps (3) détecte le temps défini prédéterminé, active la source sonore pour le deuxièm temps défini prédéterminé et émis un son de 50 à 150 décibel pour le deuxieme temps défini, où la source sonore pourrait être éteindre en fermant la boucle.

4. Méthode d'assurance de siège de conducteur pour les conducteurs dans les véhicules avec une cabine ouverte pas fermée, selon revendication 3, définis dans l'unité de commande et d'exploitation (1) est conceptualisé en telle manière que l'état et/ou les changements de capteur dans la boucle (2) et les signaux émis par le capteur dans la boucle (2) dans l'unité de commande et d'exploitation(1) sont détectés et évalués sans arrêt.

5. Méthode d'assurance de siège de conducteur pour les conducteurs de véhicules avec une cabine ouverte pas fermée selon les revendications 3-4, définis que la source sonore (5) reste en silence en toute circonstance après un temps défini.

6. Méthode d'assurance de siège de conducteur pour les conducteurs de véhicules avec une cabine ouverte pas fermée selon une ou plusièures revendications 3-5, la véhicule en cause ne peut pas être démarrée ou se mettre en mouvement, si le dispositif d'identification de conducteur identifie que le conducteur prendre place ait une boucle déjà fermée.

7. Méthode d'assurance de siège de conducteur pour les conducteurs dans les véhicules avec une cabine ouverte pas fermée selon une ou plusieurs revendications 3-6, définies le démarrage ou la mise en mouvmeent de véhicule en cause qui est uniquement possible lors de moment d'ouverture de boucle et si le conducteur est assiégé ou s'est levé et s'est assis encore.
